# FASCICULE DE BREVET EUROPEEN

(11) **EP 0 718 992 B1**
(45) Date de publication et mention de la délivrance du brevet: **16.06.2004**
(21) Numéro de dépôt: 95402857.7
(22) Date de dépôt: 18.12.1995
(51) Int. Cl.: H04B 10/18

(54) **Dispositif de régénération en ligne d'un signal tranmis par solitons via la modulation synchrone des solitons à l'aide d'un miroir optique non-linéaire**
Vorrichtung zum Inline-Regenerieren eines Solitonsignals durch synchrone Modulation der Solitone mit einem nicht-linearen optischen Spiegel
Inline regenerator device of a soliton signal via synchronous solitory modulation using a non-linear optical mirror

(30) Priorité: 23.12.1994 FR 9415555
(43) Date de publication de la demande: 26.06.1996
(73) Titulaire: ALCATEL, 75382 Paris Cédex 08 (FR)
(72) Inventeur: Desurvire, Emmanuel, F-91680 Bruyeres le Chatel (FR); Bigo, Sebastien, F-91120 Palaiseau (FR)
(74) Mandataire: Lamoureux, Bernard

(56) Documents cités:
- ELECTRONICS LETTERS, vol. 30, no. 21, 13 Octobre 1994 page 1777/1778 XP 000476409 NAKAZAWA M ET AL '80GBIT/S SOLITON DATA TRANSMISSION OVER 500KM WITH UNEQUAL AMPLITUDE SOLITONS FOR TIMING CLOCK EXTRACTION'
- ELECTRONICS LETTERS, vol. 28, no. 14, 2 Juillet 1992 pages 1350-1352, XP 000307842 JINNO M ET AL 'ALL-OPTICAL REGENERATOR BASED ON NONLINEAR FIBRE SAGNAC INTERFEROMETER'
- OPTICAL FIBER COMMUNICATION, OFC' 94, TECHNICAL DIGEST, vol. 4, no. FG2, 20 - 25 Février 1994 SAN JOSE, CALIFORNIA, pages 310-311, SANDEL D ET AL 'Polarization-independent regenerator with nonlinear optoelectronic phase-locked loop'
- ELECTRONICS LETTERS, vol. 30, no. 12, 9 Juin 1994 STEVENAGE GB, pages 984-985, XP 000459796 BIGO S ET AL 'Bit-rate enhancement through optical NRZ-to-RZ conversion and passive time-division multiplexing for soliton transmission systems'
- OPTICS LETTERS, vol. 18, no. 15, 1 Août 1993 pages 1226-1228, XP 000382933 LUCEK J K ET AL 'ALL-OPTICAL SIGNAL REGENERATOR'

## Description

L'invention concerne le domaine de télécommunications sur fibre optique, et plus particulièrement des télécommunications sur des longues distances. Il est connu, pour des liaisons très longues distances à fibre optique, d'utiliser un signal de type dit "soliton" ayant des propriétés spectrales particulières qui permettent au signal de se propager sur la fibre dispersive sans dispersion chromatique appréciable, c'est-à-dire que l'on utilise la dépendance de l'indice de réfraction sur l'intensité du signal pour contrebalancer la dispersion chromatique ou vice-versa. La forme spectrale du signal est préservée malgré les effets de la distance de propagation, qui se résument ainsi principalement à des pertes de ligne. Ces pertes de ligne peuvent être compensées par une amplification optique en ligne, par exemple à l'aide d'un amplificateur à fibre dopée Erbium, ou "EDFA" en anglais.

Pour la transmission par solitons avec amplification en ligne (EDFA) les problèmes qui restent à résoudre sont connus :
1) la gigue Gordon-Haus qui cause une incertitude temporelle de l'arrivée des bits du signal ;
2) l'accumulation de bruit provenant de l'amplification de l'émission spontanée dans les amplificateurs optiques.

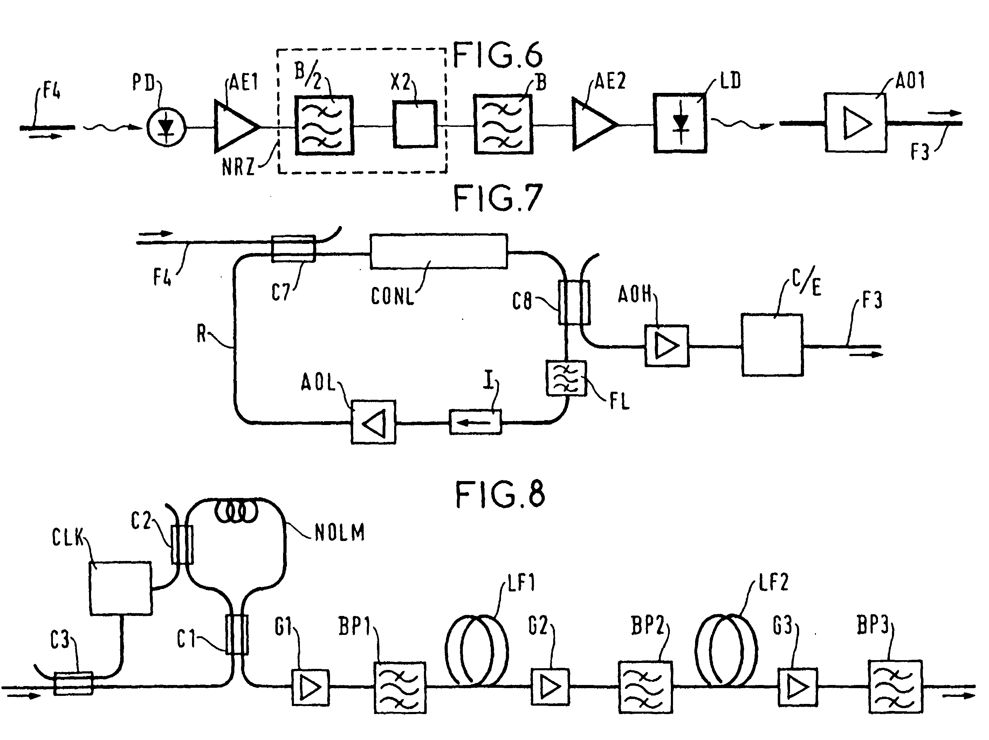

Différentes solutions ont été proposées et décrites dans les documents suivants qui sont expressément incorporés à la présente demande en tant que descriptions de l'art antérieur :
1) l'auto filtrage par miroir optique non linéaire amplificateur (connu de l'homme de l'art par l'acronyme anglophone NALM pour nonlinear amplifying loop mirror) : D1= M. Matsutomo et al., (1994) "Suppression of noise accumulation in bandwidth-limited soliton transmission by means of nonlinear loop mirrors", Optics Letters v.19, n°.3, pp. 183-185, 1 fev. 1994. Selon l'enseignement de ce document, les pertes de ligne du signal soliton sont palliées par l'amplification induit dans une boucle de fibre comprenant des moyens d'amplification, ce dispositif NALM agissant comme un composant amplificateur à gain non linéaire et à haut débit. Ce dispositif amplificateur amplifie sélectivement les solitons, et à moindre degré les bruits accumulés en dehors du domaine spectral des solitons, notamment des bruits provenant de l'émission spontanée amplifiée (ou ASE en anglais).
2) le filtrage guidant et glissant, D2= L.F. Mollenauer et al., (1992) "The sliding-frequency guiding filter: an improved form of soliton jitter control", Optics Letters v.17, n°22, pp. 1575-1577, 15 nov. 1992. Cette méthode utilise des composants passifs uniquement, mais limite la distance maximale de transmission, car le bruit provenant de l'ASE croît exponentiellement avec la distance. La raison en est que le filtrage périodique par les filtres guidants introduit d'avantage de pertes en ligne, qui doivent être compensées par un gain accru à chaque étape d'amplification optique. Le bruit présent dans la fenêtre spectrale des filtres est alors amplifié aussi à chaque étape d'amplification, mais jamais filtré par les filtres guidants. L'amplitude de ce bruit, multiplié à chaque amplificateur, prend alors des proportions considérables et croît de façon exponentielle avec la distance de transmission.
3) la modulation synchrone avec filtrage, D3 = H. Kubota et M. Nakazawa, (1993), "Soliton transmission control in time and frequency domains", IEEE J. Quantum Electronics v.29, n°7, pp.2189-2197, July 1993. démontre l'intérêt théorique par le calcul de cette méthode (voir schéma fig. 8). Aucune solution pratique n'est préconisée, mais il est fait référence à une expérience de transmission à 10 Gbit/s sur 1 million de kilomètres dans D4= Nakazawa et al., (1991), "Experimental demonstration of soliton data transmission over unlimited distances with soliton control in time and frequency domains", Electronics Letters, v.29, n°9, pp.729-730, 29 avril 1993.

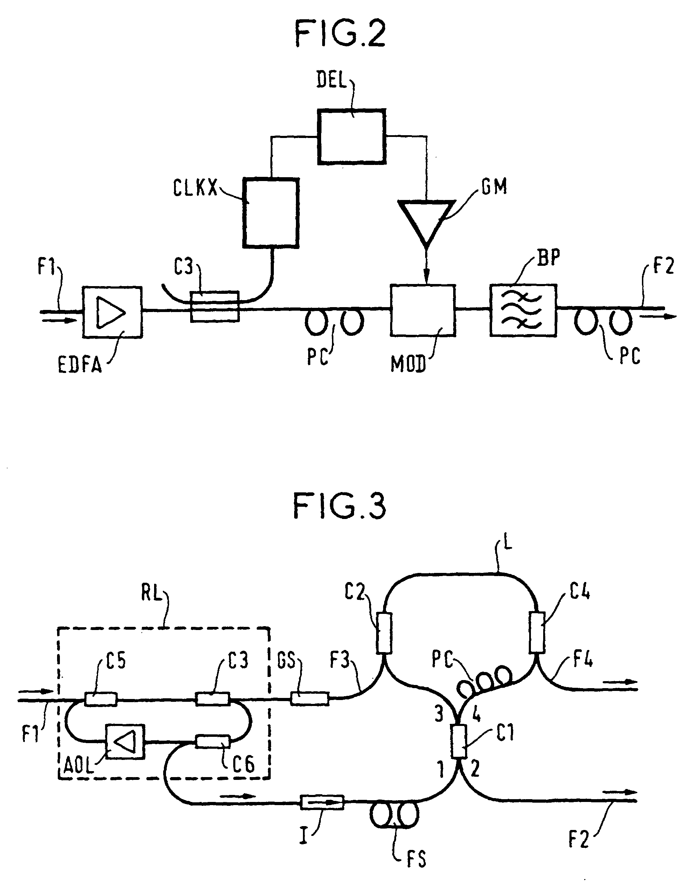

Ce document D4 enseigne l'utilisation d'un modulateur optique en LiNO₃ pour effectuer la modulation synchrone des solitons, tel que montré schématiquement sur la figure 2. Le problème avec cette solution est que le débit de signaux à régénérer ne pourra dépasser les 20 à 30 Gbit/s (10 Gbit/s dans le document D4). Le modulateur en LiNO₃ est commandé par un signal électronique de commande généré dans un circuit d'horloge à partir du signal de solitons en ligne. Les moyens de récupération d'horloge comprennent un coupleur optique C3 pour l'extraction d'une partie du signal optique qui se propage entre l'entrée F1 et la sortie F2 ; un circuit d'extraction d'horloge CLKX, une ligne à retard pour fournir un délai DEL, et un amplificateur GM pour fournir la puissance de commande nécessaire pour faire fonctionner le modulateur MOD en LiNO₃. Accessoirement, la figure,2 montre un amplificateur optique d'entrée (EDFA) pour pallier les pertes d'insertion du circuit de régénération ; des dispositifs de contrôle de polarisation (PC) biréfringents ; et un filtre passe-bande BP pour resserrer la distribution spectrale de l'énergie des solitons. Certains de ces accessoires se retrouveront dans des réalisations préférées de l'invention décrites ci-après.

Par ailleurs, il est connu un système de régénération d'un signal optique ayant la forme d'un train de bits constitué d'impulsions de lumière pour les bits "1" et d'absences d'impulsions pour les bits "0" aux moments prédéterminés et connus par une horloge : D5= J. K. Lucek et K. Smith, (1993) "All optical signal regenerator", Opt. Lett. v.18, n°15, pp.1226-1228, 1 aug.1993) . Le système de ce document D5 est montré sur la figure 3 et décrit ci-après.

D'autres documents sont utiles pour une meilleure compréhension de la présente invention, et seront introduits brièvement avec une appréciation de leurs apports dans ce but. Ces documents sont également expressément incorporés à la présente demande en tant que descriptions de l'art antérieur :

D6= N. Finlayson et al., (1992) "Switch inversion and polarization sensitivity of the nonlinear-optical loop mirror (NOLM)", Optics Lett., v.17, n°2, pp. 112-114, 15 jan. 1992. Ce document enseigne que le NOLM peut être configuré comme un,commutateur qui n'est pas ou peu sensible à la polarisation du signal lumineux à commuter dans son régime linéaire, et que la biréfringence de la boucle peut contribuer aux instabilités constatées dans des lasers en anneau à blocage de modes.

D7= K. Uchiyama et al., (1992) "Ultrafast polarisation - independent all-optical switching using a polarisation diversity scheme in the nonlinear optical loop mirror (NOLM)", electron. lett., v.28, no.20, pp. 1864-1866, 24 sept. 1992. Ce document montre l'utilisation d'un NOLM comme un commutateur, qui est rendu insensible à la polarisation de la lumière du signal à commuter. Ceci est obtenu en utilisant une fibre à maintien de polarisation, que l'on aurait coupée et tournée à 90° au point médian de la boucle du NOLM. Le principe en est illustré en figure 5.

La boucle du NOLM est constituée par exemple d'une fibre à maintien de polarisation PANDA à deux trous. En effectuant une rotation de 90° entre l'axe A1 et l'axe A2 à mi-chemin de propagation, l'axe rapide (respectivement lent) de la partie gauche devient l'axe lent (respectivement rapide) de la partie droite de la boucle sur la figure 5. La fibre de la boucle (L) est dispersive en polarisation, c'est-à-dire que la vitesse de propagation de la lumière à l'intérieur de la fibre est différente pour une polarisation alignée avec l'axe rapide que pour une polarisation orthogonale à l'axe rapide de propagation, c'est-à-dire l'axe lent de la fibre. Il est nécessaire de s'affranchir de la dispersion en polarisation, ce que l'on réalise en utilisant deux longueurs identiques de fibre ayant une disposition mutuellement orthogonale des axes A1, A2 de maintien de polarisation, ce qui aura pour effet d'annuler la dispersion de polarisation.

Pour rendre le système indépendant de la polarisation du signal commuté, la polarisation du signal de contrôle qui est introduit dans la boucle L par le coupleur C2 sur la fibre d'entrée de contrôle F3 est injecté à 45° des deux axes orthogonaux A1, A2. De la même manière que précédemment, les effets de la dispersion de polarisation s'annulent.

D8= L.E. Adams et al., (1994) "All-optical clock recovery using a modelocked figure eight laser with a semiconductor nonlinearity", electron. lett., v.30, n°20, pp. 1696-97, 29 sept. 1994. Ce document enseigne l'utilisation d'un laser à blocage de modes pour la récupération toute-optique d'horloge. Une récupération d'horloge toute-optique peut être utilisée dans le dispositif de l'invention, et sera décrite plus en détail ci-après avec référence à la figure 7.

D9= D. Sandel et al., (1994) : "Polarisation-independent regenerator with nonlinear optoelectronic phase-locked loop", optical fiber conference proceedings 1994, paper FG2. Ce document fait état d'une utilisation d'un NOLM ayant un coupleur 3x3 à son entrée principale. Dans une réalisation de l'invention, un tel coupleur 3x3 est utilisé pour obtenir une certaine relation de phase, telle qu'enseignée dans ce document. En effet, l'utilisation d'un coupleur 3x3, au lieu d'un coupleur 2x2, introduit un déphasage non symétrique dans la boucle du NOLM. La dégradation de rapport d'extinction en conséquence de la puissance moyen de pompage (ou le taux de remplissage de la boucle par des signaux d'horloge) vue par les signaux en contrepropagation peut être éliminée par ce déphasage, si les différents paramètres sont choisis judicieusement.

Le système connu de D5 et montré sur la figure 3 utilise un miroir optique non linéaire (NOLM) pour moduler un signal d'horloge à une première longueur d'onde λₕ = 1.56µm par le train de bits d'un signal à régénérer, ce signal étant à une deuxième longueur d'onde λₛ = 1.54µm. Le signal d'horloge ainsi modulé constitue alors le signal régénéré, qui a donc changé de longueur d'onde (1.56 µm en sortie au lieu de 1.54 µm du signal d'entrée).

Selon l'enseignement de ce document, le signal d'horloge est récupéré du signal introduit sur la fibre d'entrée F1 par blocage de modes d'un laser à fibre en anneau RL, pour générer un train d'impulsions d'horloge au rythme des bits du signal, avec une gigue réduite par le blocage de modes du laser. Le train d'impulsions d'horloge est extrait du laser en anneau par le coupleur C6, d'où il transite via un isolateur optique I et un dispositif de réglage mécanique du temps de trajet FS avant d'être introduit sur l'entrée 1 du coupleur C1 du NOLM . Le signal d'entrée à λₛ = 1.54µm est introduit dans la boucle L du NOLM par la fibre d'entrée F3 via le coupleur C2. Les dispositifs biréfringents de contrôle de polarisation PC sont ajustés pour rendre le NOLM parfaitement réfléchissant d'un signal d'horloge présent sur l'entrée 1 du coupleur C1 (réfléchissant vers l'entrée 1) en l'absence d'un signal soliton d'entrée sur le coupleur C2. En revanche, quand un bit "1" du signal est introduit dans le NOLM via le coupleur C2, il effectue une commutation qui laisse passer le signal d'horloge, qui ressort sur la fibre de sortie F2 via la sortie 2 du coupleur C1, sans gigue temporelle.

Le NOLM est donc utilisé comme un commutateur commandé par les bits du signal à régénérer, qui commute le signal d'horloge "on" quand le bit du signal est "1" (le NOLM est transparent au signal d'horloge) et "off" quand le bit du signal est "0" (le NOLM est réfléchissant au signal d'horloge).

La fenêtre temporelle du bit du signal qui constitue la commande de commutation du NOLM est élargie par rapport au signal d'horloge pour assurer une insensibilité à la gigue du signal à régénérer (voir p. 1227 col. de gauche, dernier para. du D5). Ceci est accompli par l'utilisation d'un "glissement" (or "walk-off" en anglais) relatif entre le signal introduit par C2, et le signal d'horloge en direction de co-propagation (celle des aiguilles d'une montre sur la figure), du à la dispersion chromatique entre les deux longueurs d'onde utilisées.

Le système propose par Lucek et Smith n'est pas approprié pour la régénération de solitons pour plusieurs raisons :
1) Un inconvénient majeur est le changement de la longueur d'onde du signal ;
2) D'autre part, il subsiste des problèmes pratiques de réalisation du système de Lucek et Smith (D5), puisque le NOLM est sensible à la polarisation du signal de solitons, or la polarisation du signal de solitons fourni pour commander la commutation du NOLM est indéterminée.

Les dispositifs de "contrôle de polarisation" (réf. PC sur la fig. 1 de D5) sont ajustés pour refléter le signal d'horloge sur la porte 1 en l'absence du bit "1" du signal (voir D5 p.1227 col. g. dernier para. ) ; mais ce réglage est à surveiller car dépendant sur des paramètres d'environnement (température, vibrations, ...).

La fiabilité d'opération d'un tel dispositif sur le terrain semblerait être loin d'être suffisant par rapport à ces problèmes.

Le document 'ALL-OPTICAL REGENERATOR BASED ON NONLINEAR FIBRE SAGNAC INTERFEROMETER', JINNO M ET AL, ELECTRONICS LETTERS, vol. 28, no. 14, 2 Juillet 1992 pages 1350-1352 divulgue un dispositif de régénération d'un signal optique de solitons par des moyens de modulation.

Le document '80GBIT/S SOLITON DATA TRANSMISSION OVER 500KM WITH UNEQUAL AMPLITUDE SOLITONS FOR TIMING CLOCK EXTRACTION', NAKAZAWA M ET AL, ELECTRONICS LETTERS, vol. 30, no. 21, 13 Octobre 1994 page 1777/1778 divulgue un dispositif de demultiplexage comportant des moyens de récupération d'un signal horloge et des moyens de commutation sous forme de NOLM.

L'invention a pour but de pallier les problèmes de l'art antérieur.

A ces fins, l'invention propose un dispositif de régénération en ligne d'un signal optique de solitons par une modulation synchrone de ces solitons, ledit dispositif comprenant :
- des moyens de récupération d'un signal d'horloge permettant d'extraire le rythme d'horloge des bits du signal à régénérer ;
- des moyens de modulation permettant de moduler l'amplitude des solitons par ledit signal d'horloge ;
caractérisé en ce que lesdits moyens de modulation sont constitués par un miroir optique non linéaire (NOLM).

Selon une variante, ledit dispositif comprend en outre un premier filtre pour bloquer la longueur d'onde dudit signal d'horloge, tout en laissant passer lesdits solitons. Selon une variante préférée, lesdits moyens de récupération d'horloge sont des moyens tout optiques, sans transduction optique / électronique ou vice-versa. Selon une autre variante, lesdits moyens de récupération d'horloge sont des moyens optoélectroniques, comprenant des moyens de transduction optique / électronique et vice-versa, ainsi que des moyens électroniques d'amplification et de filtrage et des moyens de mise en forme des signaux électroniques.

Selon une réalisation particulière, ledit NOLM comprend un coupleur 50/50 pour le couplage des signaux entrée-sortie vers la boucle dudit NOLM.

Selon une réalisation avantageuse, le coefficient de couplage dudit coupleur est choisi avec une valeur dissymétrique, de manière à permettre un réglage de l'importance relative de la modulation d'amplitude et de la modulation de fréquence introduites par le NOLM. Dans une réalisation particulière, ledit coupleur est un coupleur 3x3, c'est-à-dire un coupleur à six portes. Dans une réalisation particulièrement avantageuse, le signal d'horloge est approximativement sinusoïdal.

Selon une caractéristique, le dispositif de l'invention comprend en outre au moins un premier amplificateur optique compensant des pertes de ligne de l'énergie des solitons. Selon une autre caractéristique, le dispositif de l'invention comprend en outre au moins un deuxième filtre, ce(s) filtre(s) apte(s) à filtrer du bruit spectral introduit par le (s) dit (s) au moins un amplificateur(s) optique(s), et à réduire la largeur spectrale des solitons tout en augmentant leur largeur temporelle, ce(s) filtre(s) dit (s) "filtre (s) guidant (s) ". Selon une autre caractéristique avantageuse, le dispositif selon l'invention comprend en outre au moins un deuxième amplificateur optique, apte(s) à compenser les pertes d'énergie des solitons quand ils traversent le(s)dit(s) filtre (s) guidant (s).

L'invention sera mieux comprise, avec ses différentes caractéristiques et avantages, à la lumière de la description détaillée qui suit, avec ses dessins annexés, dont :
- la figure 1, qui montre schématiquement un exemple d'un miroir non linéaire optique (NOLM) connu de l'art antérieur, et apte à être utilisé dans le dispositif de l'invention ;
- la figure 2, déjà décrite, qui montre schématiquement un dispositif de modulation synchrone de solitons, connu de l'art antérieur par le document D4 ;
- la figure 3, déjà décrite, qui montre schématiquement un dispositif de régénération de solitons par commutation à l'aide d'un NOLM d'un signal d'horloge, connu de l'art antérieur par le document D5 ;
- la figure 4, qui montre schématiquement un exemple d'une réalisation selon l'invention d'un dispositif de modulation synchrone de solitons dans lequel le modulateur est un NOLM ;
- la figure 5, déjà décrite, qui montre schématiquement un commutateur NOLM insensible à la polarisation du signal à commuter, tel que connu de l'art antérieur par le document D7 ;
- la figure 6, qui montre schématiquement un exemple d'un dispositif de récupération optoélectronique d'horloge d'un signal optique selon des principes connus de l'homme de l'art ;
- la figure 7, qui montre schématiquement un exemple d'un dispositif de récupération tout-optique d'horloge d'un signal optique selon des principes connus de blocage des modes d'un laser à fibre en anneau ;
- la figure 8 qui montre schématiquement un système de transmission de signaux solitons selon l'invention, comprenant un dispositif de régénération selon l'invention ainsi qu'une pluralité d'amplificateurs optiques de ligne et une pluralité de filtres guidants ;
- la figure 9 qui montre schématiquement un exemple d'un miroir non linéaire optique (NOLM) connu de l'art antérieur, avec un coupleur optique 3x3 à son entrée principale, ce NOLM étant apte à être utilisé dans le dispositif de l'invention.

Les dessins sont donnés à titre d'exemples non limitatifs, illustratifs des principes de l'invention et de quelques variantes. Sur toutes les figures, les mêmes repères se réfèrent aux mêmes éléments, et l'échelle n'est pas toujours respectée pour des raisons de clarté.

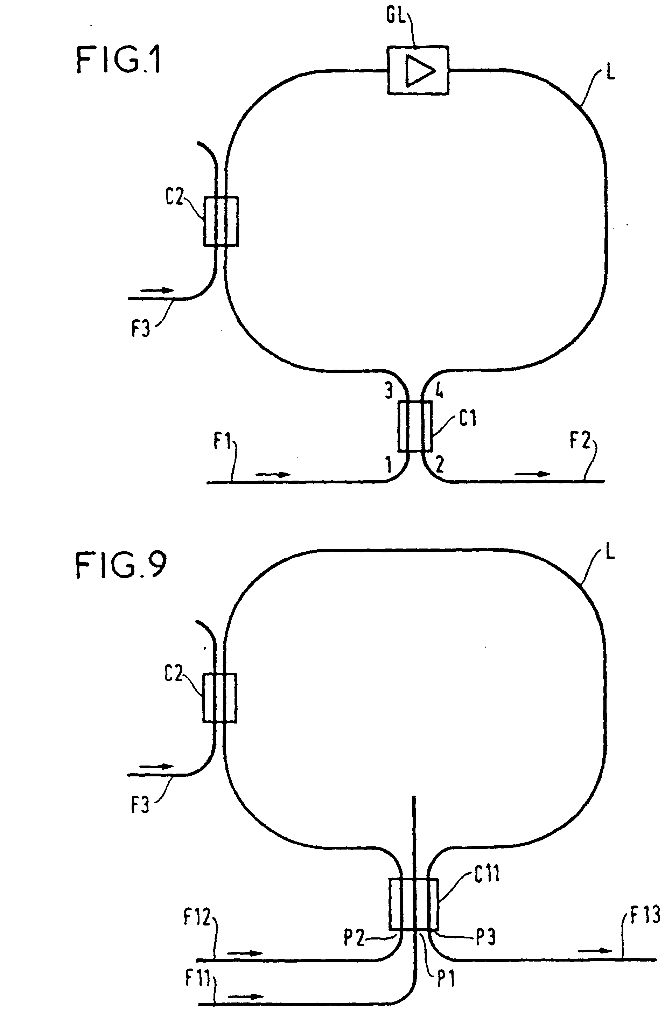

La figure 1 montre schématiquement un exemple d'un miroir non linéaire optique (NOLM) connu de l'art antérieur, apte à être utilisé dans le dispositif de l'invention. De manière générale, le NOLM comprend une boucle de fibre optique L ; un premier coupleur optique C1 avec ses quatre portes 1, 2, 3, 4, ce coupleur C1 ayant un coefficient de couplage qui décrit le partage de puissance optique entre les différentes portes ; et un deuxième coupleur optique C2 pour injecter un signal de contrôle dans le NOLM via la fibre optique de contrôle F3.

L'adjonction éventuelle d'un amplificateur optique GL dans la boucle peut conférer un gain positif à l'ensemble, ce qui en fait un miror non linéaire amplificateur (NALM), tel que décrit dans le document D1.

Le signal optique à commuter par le NOLM est introduit par la fibre d'entrée F1 à la porte 1 du coupleur C1. Décrivons tout d'abord le cas d'un coefficient de couplage du coupleur C1 de 50/50, en l'absence d'un signal de contrôle sur la fibre F3. Dans ce cas, 50 % de la puissance dudit signal optique se trouve sur la porte 4, tandis que l'autre 50 % se trouve sur la porte 3 du coupleur C1, mais avec un déphasage relatif de π/2 radians (90°) entre les deux. Les deux signaux se propagent donc dans des sens opposés dans la boucle de fibre, qui aura une longueur de l'ordre de 5 à 10 kms. Puisque les chemins optiques des deux signaux sont identiques, les signaux arrivent sur les portes 3, 4 respectivement du coupleur C1, où ils interfèrent.

Puisque les deux signaux sont déphasés de π/2, il y a interférence destructive pour l'onde résultante dirigée vers la porte 2 du coupleur C1, donc il n'y a pas de transmission du signal vers la fibre de sortie F2. En revanche, l'interférence est constructive pour l'onde résultante dirigée vers la porte 1 du coupleur C1, donc le signal présenté sur la porte 1 est totalement réfléchi par le miror NOLM vers la porte 1 dans ce cas.

Maintenant considérons le cas où il y a un signal de contrôle présent sur la fibre optique de contrôle F3. Ce signal sera couplé dans la boucle du NOLM par le coupleur optique C2, et se propagera dans la boucle dans le sens des aiguilles d'une montre. Les ondes du signal qui circulent dans la boucle en sens contraire ne seront pas ou très peu affectées par la présence d'un signal de contrôle. En revanche, les ondes du signal qui se propagent dans le même sens dans la boucle seront perturbées. En effet, la fibre de la boucle L présente un effet non linéaire, qui change l'indice de réfraction de la fibre en fonction de la puissance optique, ou plus exactement en fonction de l'amplitude du champ électrique dans la fibre (effet Kerr). Les champs électriques des ondes circulant ensemble, dites "en copropagation", se superposent linéairement, donc l'intensité résultante du champ électrique est plus grande que celle des ondes se propageant dans l'autre sens dans la boucle L.

L'indice de réfraction effective de la boucle L vue par les ondes en copropagation est différente de celle vue par les ondes en contre-propagation. Leurs vitesses de propagation sont donc différentes. Leurs temps d'arrivée sur le coupleur C1 sont différents, donc ces ondes n'interfèrent pas ou peu. La totalité de la puissance optique ou presque se trouve sur la porte 2 du couleur C1, véhiculée sur la fibre optique de sortie F2.

Ainsi, la présence d'un signal de contrôle sur la fibre de contrôle F3 est capable de commander la commutation du miroir optique non linéaire, qui sera transparent en présence du signal de contrôle, et qui sera réfléchissant en l'absence d'un signal de contrôle. La commutation peut être très rapide, de l'ordre de 100 GHz au moins. L'insertion d'un élément biréfringent dans la boucle du NOLM peut invertir les caractéristiques de commutation, pour rendre le miroir transparent en l'absence du signal de contrôle, et réfléchissant en présence d'un signal de contrôle, tel que rappelé dans l'introduction du document D6, qui traite des problèmes de sensitivité à la polarisation des signaux dans le régime non linéaire de fonctionnement d'un tel dispositif.

Le NOLM que nous venons de décrire est conforme à celui utilisé dans le dispositif de la figure 3, déjà décrite, qui montre schématiquement un dispositif de régénération de solitons par commutation à l'aide d'un NOLM d'un signal d'horloge, connu de l'art antérieur par le document D5.

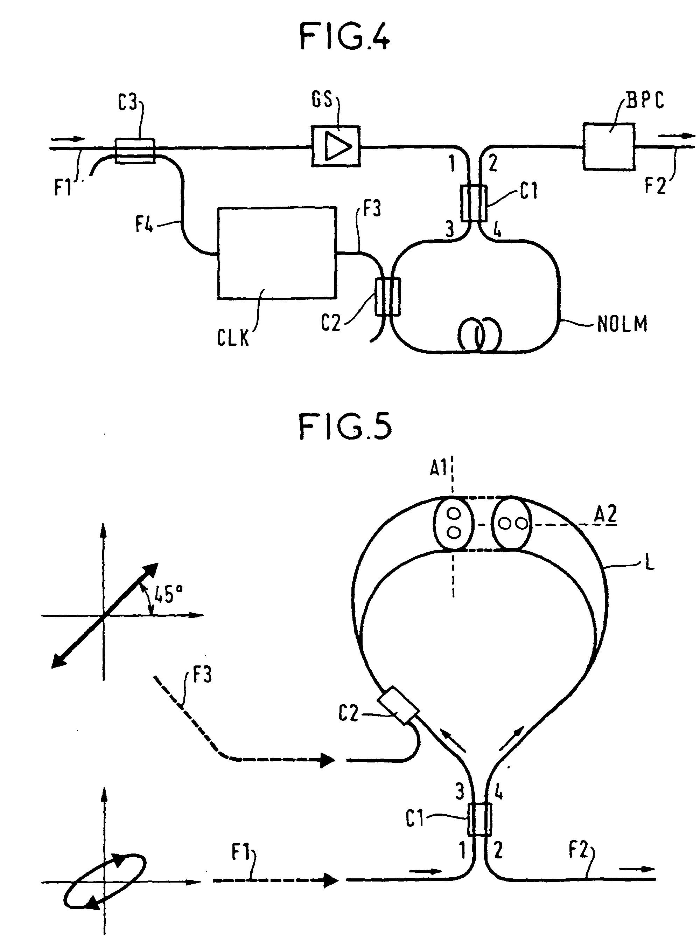

Pour pallier les inconvénients de l'art antérieur tel que représenté sur les figures 2 et 3, l'invention propose un dispositif de régénération en ligne des signaux optiques de type soliton, par la modulation synchrone des solitons à l'aide d'un NOLM tel que montré schématiquement sur la figure 4. Alors que dans l'art antérieur le NOLM est utilisé principalement comme un commutateur optique rapide, l'invention propose de l'utiliser comme un modulateur d'amplitude.

Dans le dispositif montré sur la figure 4, le signal optique de type soliton à régénérer arrive par la fibre optique d'entrée F1, où un coupleur optique C3 prélève une partie du signal pour en extraire un signal d'horloge par les moyens de récupération d'horloge CLK. Ensuite, ces moyens CLK appliquent ledit signal optique d'horloge sur l'entrée de contrôle du NOLM via le coupleur C2. Le signal soliton sera toujours à la même longueur d'onde λₛ. La longueur d'onde λₕ du signal d'horloge sera de préférence légèrement différente de celle du signal soliton λₛ, pour permettre le filtrage bloquant de l'horloge en sortie du dispositif par un filtre passe-bande BPC dont la bande passante est centrée sur la longueur d'onde λₛ du soliton.

En aval du coupleur de prélèvement C3, le signal soliton continue à se propager sur la fibre optique d'entrée F1 jusqu'à la porte d'entrée 1 du coupleur C1 du NOLM. Selon une variante de l'invention, un amplificateur optique GS peut être placé en amont du miroir NOLM pour compenser les pertes en ligne subies par le soliton depuis la dernière fois qu'il a été amplifié ou régénéré.

Le fonctionnement du NOLM est similaire à ce qui a été décrit ci-dessus en référence à la figure 1. Les solitons arrivant à la porte 1 du coupleur C1 du NOLM sont ainsi modulés par le signal d'horloge appliqué à l'entrée de contrôle F3 via le coupleur de contrôle C2. Les temps de trajet de l'horloge et des solitons selon leurs trajets respectifs doivent être ajustés comme dans le dispositif de la figure 3, pour permettre la synchronisation de ces signaux quand ils circulent dans le NOLM.

Le signal soliton est ainsi modulé par l'enveloppe du signal d'horloge, ce qui permet de procurer une modulation d'amplitude des solitons. En effet, la modulation d'amplitude est jugée suffisante pour diminuer, voire éliminer la gigue Gordon-Haus à la sortie du dispositif de régénération.

Il est préférable d'utiliser une fibre à maintien de polarisation pour la réalisation du NOLM de l'invention, conformément à la figure 5, déjà décrite. On s'arrange pour injecter le signal optique d'horloge dans le NOLM via le coupleur C2 avec son axe de polarisation orienté à 45° par rapport aux axes A1, A2 de maintien dans la fibre de boucle L. Le fonctionnement du dispositif est ainsi insensible à la polarisation du signal soliton à moduler, ce qui constitue un avantage majeur par rapport aux réalisations de l'art antérieur, et en particulier la réalisation de la figure 3. En effet, dans la réalisation de la figure 3, le signal soliton constitue le signal de commande du miroir NOLM, or ce signal aura une polarisation arbitraire, inconnue, et non-maitrisable. La sensibilité du NOLM à la polarisation du signal peut donc nuire aux performances de ce dispositif de l'art antérieur.

Les moyens CLK de récupération d'horloge peuvent être soit des moyens tout optiques (voir figure 7), soit des moyens optoélectroniques (voir figure 6).

La figure 6 montre schématiquement un exemple d'un dispositif de récupération optoélectronique d'horloge d'un signal optique selon des principes connus de l'homme de l'art. Le signal optique prélevé par le coupleur de prélèvement C3 de la figure 4 se propage sur la fibre optique F4 jusqu'à un photodétecteur PD qui convertit le signal optique en signal électronique. Le signal électronique ainsi obtenu est d'abord amplifié par l'amplificateur électronique hyperfréquence AE1, puis dans le cas d'un signal NRZ (non return to zero en anglais), le signal sera filtré par un premier filtre passe-bande B/2. Dans l'exemple de la figure 6, et pour un signal NRZ le signal filtré est ensuite multiplié en fréquence par un doubleur de fréquence X2, et subit un deuxième filtrage passe-bande dans le filtre B. Dans le cas d'un signal soliton, le filtrage par le filtre B sera le premier filtrage. Le signal est alors amplifié pour commander un laser diode LD, qui émet un signal lumineux au rythme des impulsions électroniques qui sont les résultats des signaux optiques prélevés en C3. Ce signal optique peut éventuellement être amplifié par un amplificateur optique AO1 avant d'être appliqué à l'entrée de commande du NOLM via la fibre de commande F3 et le coupleur C2 de la figure 4.

La figure 7 montre schématiquement un exemple d'un dispositif de récupération tout-optique d'horloge d'un signal optique selon des principes connus de blocage des modes d'un laser à fibre en anneau. Le signal optique de type soliton, prélevé par le coupleur de prélèvement C3 de la figure 4, se propage sur la fibre optique F4 jusqu'à une boucle de fibre R à laquelle il est couplé via le coupleur C7. La boucle de fibre R et les différent composants optiques qui s'y trouvent forment un laser en anneau, tel que déjà décrit en référence à la figure 3 (repère RL) ou tel que décrit dans le document D8 de L. E. Adams et al. Le laser en anneau comprend des moyens d'amplification optique AOL, un isolateur optique I pour un fonctionnement unidirectionnel, des moyens de filtrage optique FL centrés sur la longueur d'onde de la lumière laser, et des moyens de couplage optique non linéaire CONL permettant d'obtenir des non linéarités d'amplitude et/ou de phase en fonction de l'amplitude du champ électrique de la lumière circulant dans la fibre R. Ces moyens non linéaires CONL peuvent être par exemple un NOLM tel que décrit sur les figures précédentes ou dans le document D8.

Le laser en anneau peut fonctionner en continu (CW) en l'absence d'un signal soliton injecté via le coupleur C7. En revanche, dès qu'un train de bits est introduit via le coupleur C7, il y a un déphasage non linéaire asymétrique introduit entre des composants en contrepropagation, augmentation de la transmitivité du NOLM, et blocage de modes du laser en anneau au rythme des bits du signal. Ces impulsions peuvent être ensuite prélevées via le coupleur optique C8 pour donner un signal d'horloge sensiblement sans gigue temporelle. Pour rendre ce signal aisément exploitable en vue de la modulation synchrone, la figure 7 montre un deuxième amplificateur optique AOH et des moyens de compression et/ou expansion, pour donner la forme voulue aux impulsions issues du laser en anneau (amplitude, durée, forme temporelle de montée et descente,...). En effet, les impulsions brutes sont relativement étroites, et il peut être souhaitable de les élargir avant de les utiliser. Ainsi, les impulsions d'horloge fournies sur la fibre optique F3 seront optimisées pour l'utilisation voulue.

La figure 8 montre schématiquement un système de transmission de signaux solitons selon l'invention, comprenant un dispositif de régénération selon l'invention (C3, CLK, C2, C1, NOLM) ainsi qu'une pluralité d'amplificateurs optiques de ligne (G1, G2, G3...) et une pluralité de filtres guidants (BP1, BP2, BP3....). Les filtres guidants compriment la largeur spectrale des solitons, mais enlèvent de l'énergie des solitons en se faisant. C'est pourquoi le gain des amplificateurs en ligne doit être supérieur aux pertes de ligne subies par les solitons sur les fibres optiques (LF1, LF2, ...) entre les amplificateurs (G1, G2, G3, ...). En réduisant la largeur spectrale des solitons, la gigue temporelle est aussi réduite par les filtres guidants, tel qu'expliqué dans le document D2.

La figure 9 montre schématiquement un exemple d'un miroir non linéaire optique (NOLM) connu de l'art antérieur, avec un coupleur optique 3x3 C11 à son entrée principale, ce NOLM étant apte à être utilisé dans le dispositif de l'invention. L'utilisation d'un coupleur 3x3, au lieu d'un coupleur 2x2, introduit un déphasage non symétrique dans la boucle du NOLM. La dégradation de rapport d'extinction en conséquence de la puissance moyen de pompage (ou le taux de remplissage de la boucle par des signaux d'horloge) vue par les signaux en contrepropagation peut être éliminée par ce déphasage, si les différents paramètres sont choisis judicieusement.

Le coupleur 3x3 à six portes, dont trois portes d'entrée P1, P2, P3. Ce qui nous importe c'est la relation de phase entre les différentes portes. Dans le cas d'un coupleur 2x2, il existe un déphasage entre le chemin direct (1,3) et le chemin croisé (1,4) de π/2. Dans le cas d'un coupleur 3x3, il existe un déphasage de ± π/3 entre les portes voisines. Avec le bon choix des portes d'entrée/sortie, il est possible de choisir le signe du déphasage pour introduire un déphasage non symétrique dans la boucle du NOLM. La dégradation de rapport d'extinction en conséquence de la puissance moyenne de pompage (ou le taux de remplissage de la boucle par des signaux d'horloge) vue par les signaux en contrepropagation peut être éliminée par ce déphasage.

Par exemple, le signal soliton est injecté sur la fibre optique F11 via la porte P1 du coupleur C11. La fibre F12, raccordée à la porte P2, n'est pas connectée (mais seulement terminée pour éviter des réflexions parasites éventuelles). Les signaux introduits sur la fibre F11 sont couplés aux deux autres fibres F12 et F13 au sein du coupleur 3x3 C11. Le NOLM fonctionne comme dans les exemples précédents. Les effets de déphasage sur les ondes en contrepropagation peuvent s'annuler avec la constante asymétrique introduite par le déphasage de π/3.

Comme dans les cas précédents, le signal soliton régénéré par modulation synchrone sera présenté sur la fibre F13 via la porte P3 du coupleur C11 quand le signal d'horloge est appliqué au NOLM sur la fibre F3 via le coupleur optique C2.

Le dispositif de l'invention a été décrit en faisant référence à quelques exemples seulement de réalisations utilisant tels ou tels dispositifs de l'art connu pour constituer le NOLM, pour récupérer et fournir le signal d'horloge sur l'entrée commandé du NOLM, et pour résoudre quelques mineurs problèmes que l'on pourra rencontrer lors de la réalisation d'un système de régénération en ligne de solitons. La liste de réalisations selon l'invention n'est bien sur pas exhaustive, et l'homme de l'art saura adapter le dispositif de l'invention à ses propres besoins.

## Revendications

1. Dispositif de régénération en ligne d'un signal optique de solitons par une modulation synchrone de ces solitons, ledit dispositif comprenant :
- des moyens de récupération d'un signal d'horloge permettant d'extraire le rythme d'horloge des bits du signal à régénérer (C3, CLK) ;
- des moyens de modulation permettant de moduler l'amplitude des solitons par ledit signal d'horloge ;
lesdits moyens de modulation étant constitués par un miroir optique non linéaire (NOLM).

2. Dispositif selon la revendication 1, **caractérisé en ce que** ledit dispositif comprend en outre un premier filtre (BPC) pour bloquer la longueur d'onde λₕ dudit signal d'horloge, tout en laissant passer lesdits solitons (λₛ).

3. Dispositif selon l'une quelconque des revendications 1 à 2, **caractérisé en ce que** lesdits moyens de récupération d'horloge (C3, CLK) sont des moyens tout optiques, sans transduction optique / électronique ou vice-versa.

4. Dispositif selon l'une quelconque des revendications 1 à 2, **caractérisé en ce que** lesdits moyens de récupération d'horloge sont des moyens optoélectroniques, comprenant des moyens de transduction optique / électronique (PD) et vice-versa (LD), ainsi que des moyens électroniques d'amplification (AE1, AE2) et de filtrage (B/2, B) et des moyens de mise en forme (NRZ) des signaux électroniques.

5. Dispositif selon l'une quelconque des revendications 1 à 4, **caractérisé en ce que** ledit NOLM comprend un coupleur 50/50 (C1) pour le couplage des signaux entrée-sortie vers la boucle (L) dudit NOLM.

6. Dispositif selon l'une quelconque des revendications 1 à 4, **caractérisé en ce que** ledit NOLM comprend un coupleur (C1) ayant un coefficient de couplage d'une valeur dissymétrique, de manière à permettre un réglage de l'importance relative de la modulation d'amplitude et de la modulation de fréquence introduites par ledit NOLM.

7. Dispositif selon l'une quelconque des revendications 1 à 4, **caractérisé en ce que** ledit NOLM comprend un coupleur (C11) et ledit coupleur (C11) est un coupleur 3x3.

8. Dispositif selon l'une quelconque des revendications 1 à 7, **caractérisé en ce que** ledit signal d'horloge est approximativement sinusoïdal.

9. Dispositif selon l'une quelconque des revendications 1 à 8, **caractérisé en ce que** ledit dispositif de l'invention comprend en outre au moins un premier amplificateur optique (GS) compensant des pertes de ligne de l'énergie des solitons.

10. Dispositif selon la revendication 9, **caractérisé en ce que** ledit dispositif de l'invention comprend en outre au moins un deuxième filtre (BP1, ...), ce(s) filtre(s) apte(s) à filtrer du bruit spectral introduit par le (s) dit (s) au moins un amplificateur (s) optique (s) (GS, ...), et à réduire la largeur spectrale des solitons tout en augmentant leur largeur temporelle, ce(s) filtre(s) (BP1, ...) dit (s) "filtre(s) guidant(s)".

11. Dispositif selon la revendication 10, **caractérisé en ce que** ledit dispositif selon l'invention comprend en outre au moins un deuxième amplificateur optique (G1, ...), apte(s) à compenser les pertes d'énergie des solitons quand ils traversent le (s) dit (s) filtre(s) guidant(s) (BP1, ...).

## Claims

1. In-line regenerating apparatus for regenerating a soliton optical signal by performing synchronous modulation on the solitons, said apparatus including:
clock signal recovery means enabling the clock rate to be extracted from the bits of the signal to be regenerated (C3, CLK); and
modulation means enabling the amplitude of the solitons to be modulated by said clock signal;
said modulation means being constituted by a non-linear optical loop mirror (NOLM).

2. Apparatus according to claim 1, **characterized in that** said apparatus further includes a first filter (BPC) for stopping the wavelength λₕ of said clock signal, while allowing said solitons (λₛ) to pass therethrough.

3. Apparatus according to claim 1 or 2, **characterized in that** said clock recovery means (C3, CLK) are all-optical means, with no optical-to-electronic or electronic-to-optical transducer means.

4. Apparatus according to claim 1 or 2, **characterized in that** said clock recovery means are opto-electronic means comprising optical-to-electronic transducer means (PD) and electronic-to-optical transducer means (LD), together with electronic amplification means (AE1, AE2) and electronic filtering means (B/2, B), and shaping means (NRZ) for shaping the electronic signals.

5. Apparatus according to any one of claims 1 to 4, **characterized in that** said NOLM includes a 50/50 coupler (C1) for coupling the input-output signals towards the loop (L) of said NOLM.

6. Apparatus according to any one of claims 1 to 4, **characterized in that** said NOLM includes a coupler (C1) having an asymmetrical coupling coefficient, so as to make it possible to adjust the relative size of the amplitude modulation and of the frequency modulation that are imparted by said NOLM.

7. Apparatus according to any one of claims 1 to 4, **characterized in that** said NOLM includes a coupler (C11) and said coupler (C11) is a 3x3 coupler.

8. Apparatus according to any one of claims 1 to 7, **characterized in that** said clock signal is approximately in the form of a sine-wave.

9. Apparatus according to any one of claims 1 to 8, **characterized in that** said apparatus of the invention further includes at least one first optical amplifier (GS) compensating for the line losses of energy from the solitons.

10. Apparatus according to claim 9, **characterized in that** said apparatus of the invention further includes at least one "guiding" second filter (BP1, ...) capable of filtering out spectrum noise imparted by said at least one optical amplifier (GS, ...), and of reducing the spectrum width of the solitons while increasing their time width.

11. Apparatus according to claim 10, **characterized in that** said apparatus of the invention further includes at least one second optical amplifier (G1, ...), capable of compensating for energy losses from the solitons when they pass through said guiding filter(s) (BP1, ...).

## Patentansprüche

1. Vorrichtung zur Inline-Rückgewinnung eines optischen Solitonsignals durch eine synchrone Modulation dieser Solitone, wobei besagte Vorrichtung:
- Vorrichtungen zur Rückgewinnung eines Taktsignals, die es gestatten, den Taktrhythmus der zurückzugewinnenden Signalbits zu extrahieren (C3, CLK), sowie
- Modulationsvorrichtungen, die es gestatten, die Amplitude der Solitone mit besagtem Taktsignal zu modulieren, beinhaltet, wobei besagte Modulationsvorrichtungen aus einem nichtlinearen optischen Spiegel (NOLM) bestehen.

2. Vorrichtung gemäß Anspruch 1, **dadurch gekennzeichnet, daß** besagte Vorrichtung außerdem ein erstes Filter (BPC) beinhaltet, das die Wellenlänge λₕ, des besagten Taktsignals sperrt, aber zugleich die besagten Solitone (λₛ) passieren läßt.

3. Vorrichtung gemäß einem oder beiden der Ansprüche 1 bis 2, **dadurch gekennzeichnet, daß** besagte Vorrichtungen zur Taktsignal-Rückgewinnung (C3, CLK) rein optische Vorrichtungen sind, bei denen keine Umsetzung "optisch/elektronisch" oder umgekehrt erfolgt.

4. Vorrichtung gemäß einem oder beiden der Ansprüche 1 bis 2, **dadurch gekennzeichnet, daß** besagte Vorrichtungen zur Taktsignal-Rückgewinnung optoelektronische Vorrichtungen sind, die ihrerseits Vorrichtungen zur Umsetzung "optisch/elektronisch" (PD) oder umgekehrt (LD) beinhalten, ferner elektronische Vorrichtungen zur Verstärkung (AE1, AE2) und Filterung (B/2, B) sowie Vorrichtungen zur Formung (NRZ) der elektronischen Signale.

5. Vorrichtung gemäß einem oder mehreren der Ansprüche 1 bis 4, **dadurch gekennzeichnet, daß** besagter NOLM einen 50/50-Koppler (C1) zur Kopplung der Ein- und Ausgangssignale mit der Schleife (L) des besagten NOLMs beinhaltet.

6. Vorrichtung gemäß einem oder mehreren der Ansprüche 1 bis 4, **dadurch gekennzeichnet, daß** besagter NOLM einen Koppler (C1) beinhaltet, dessen Kopplungskoeffizient einen asymmetrischen Wert aufweist, was eine Regelung des relativen Grades der durch besagten NOLM bewirkten Amplitudenmodulation und Frequenzmodulation ermöglicht.

7. Vorrichtung gemäß einem oder mehreren der Ansprüche 1 bis 4, **dadurch gekennzeichnet, daß** besagter NOLM einen Koppler (C11) beinhaltet und daß besagter Koppler (C11) ein 3x3-Koppler ist.

8. Vorrichtung gemäß einem oder mehreren der Ansprüche 1 bis 7, **dadurch gekennzeichnet, daß** besagte Taktsignal näherungsweise sinusförmig ist.

9. Vorrichtung gemäß einem oder mehreren der Ansprüche 1 bis 8, **dadurch gekennzeichnet, daß** besagte erfindungsgemäße Vorrichtung außerdem mindestens einen ersten optischen Verstärker (GS) beinhaltet, der die Leitungsverluste der Energie der Solitone kompensiert.

10. Vorrichtung gemäß Anspruch 9, **dadurch gekennzeichnet, daß** besagte erfindungsgemäße Vorrichtung außerdem mindestens ein zweites Filter (BP1, ...) beinhaltet, wobei dieses (bzw. diese) Filter geeignet ist (bzw. sind), das spektrale Rauschen auszufiltern, das durch mindestens den einen (bzw. die) optische(n) Verstärker (GS, ...) hervorgerufen wird, und die spektrale Bandbreite der Solitone bei gleichzeitiger Vergrößerung ihrer zeitlichen Breite zu reduzieren, und wobei dieses (bzw. diese) Filter (BP1, ...) als "Führungsfilter" bezeichnet wird (bzw. werden).

11. Vorrichtung gemäß Anspruch 10, **dadurch gekennzeichnet, daß** besagte erfindungsgemäße Vorrichtung außerdem mindestens einen zweiten optischen Verstärker (G1, ...) beinhaltet, der geeignet ist (bzw. die geeignet sind), die Energieverluste der Solitone zu kompensieren, wenn diese das besagte (bzw. die besagten) Führungsfilter (BP1,...) durchlaufen.
